# EUROPÄISCHE PATENTSCHRIFT

(11) **EP 2 896 522 B1**
(45) Veröffentlichungstag und Bekanntmachung des Hinweises auf die Patenterteilung: **13.04.2016**
(21) Anmeldenummer: 15150172.3
(22) Anmeldetag: 06.01.2015
(51) Int. Cl.: B60G 21/055, B60G 21/05

(54) **Kraftfahrzeugachse**
Motor vehicle axle
Axe de véhicule automobile

(30) Priorität: 21.01.2014 DE 102014100618
(43) Veröffentlichungstag der Anmeldung: 22.07.2015
(73) Patentinhaber: Benteler Automobiltechnik GmbH, 33102 Paderborn (DE)
(72) Erfinder: Bera, Waldemar, 33178 Borchen (DE); Rudi, Vitalis, 33102 Paderborn (DE); Schultz, Erik, 33100 Paderborn (DE); Bürger, Manfred, 33181 Bad Wünnenberg (DE)
(74) Vertreter: Griepenstroh, Jörg

(56) Entgegenhaltungen:
- EP-A1- 0 752 332
- WO-A1-2010/124115
- DE-A1-102008 036 340
- DE-A1-102009 004 441
- DE-A1-102009 024 831
- DE-A1-102009 050 058
- DE-A1-102012 104 999
- US-A1- 2007 108 714
- US-B1- 7 284 765

## Beschreibung

Die Erfindung bezieht sich auf eine Kraftfahrzeugachse gemäß den Merkmalen im Oberbegriff von Patentanspruch 1.

Verbundlenkerachsen weisen gewöhnlicherweise zwei Längslenker auf, an denen ein Fahrzeugrad befestigt ist und die durch einen Querträger miteinander verbunden werden. An diese Querträger werden besondere Anforderungen gestellt. Ihre Endabschnitte sollen möglichst steif gestaltet sein, um unerwünschte Spur- und Sturzänderungen zu vermeiden. Gleichzeitig sollen sie aber auch torsionsweich sein, was zumeist durch einen torsionsweichen Mittelabschnitt des Querträgers erzielt wird. Im Übergangsbereich zwischen torsionsweichen Mittelabschnitt und den steifen Endabschnitten kommt es im Betrieb zu hohen Spannungsspitzen, welche die Lebensdauer der Verbundlenkerachse beeinträchtigen.

Zur Erhöhung der Steifigkeit der Endabschnitte des Querträgers ist es aus dem Stand der Technik bekannt, die Endabschnitte durch Verstärkungsbleche zu versteifen, die in das Querträgerprofil eingesetzt werden.

So offenbart beispielsweise die DE 10 2009 004 441 A1 eine Verbundlenkerachse für ein Kraftfahrzeug umfassend zwei Längslenker, einen biegesteifen jedoch torsionsweichen Querträger, der die beiden Längslenker miteinander verbindet, sowie einen Federteller, der zusammen mit einem Schottblech, das den Endabschnitt des Querträgers versteift, die Gesamtsteifigkeit des Abschnittes weiter erhöht. Die Schottbleche können dabei zum Querträger schräg angestellt eingebaut werden, so dass sie ausgehend von ihrem längsträgerseitigen Ende in Richtung des zur Achsmitte weisenden Endes tiefer in den Profilquerschnitt des Querträgers eindringen.

Die US 2007/0108714 A1 offenbart eine Kraftfahrzeugachse mit zwei Längslenkern und einem diese verbindenden Querträger. Der Querträger nimmt dabei einen die Längslenker verbindenden Stab in sich auf. Die Endbereiche des Querträgers werden durch Verstärkungsbleche verstärkt, die in ihrem querträgerseitigen Abschnitt bifurkiert sind. Das Verstärkungsblech umfasst den Stabilisatorstab innerhalb des Querträgers. Die Verstärkungsbleche weisen zusätzlich einen mehrfach gebogenen Verlauf auf.

Aus der DE 10 2012 104 999 A1 geht eine Verbundlenkerachse hervor, die zwei Längslenker aufweist sowie einen Querträger, der die beiden Längslenker miteinander verbindet. In den Endbereichen ist der Querträger durch Verstärkungsbleche verstärkt. Bei der Herstellung dieser Verstärkungsbleche werden diese zunächst mit einem Entlastungsschlitz versehen und dieser Entlastungsschlitz wird nach dem Einschweißen der Verstärkungsbleche in dem Querträger wieder verschlossen. Dies kann beispielsweise durch Klebstoff oder auch durch einen Schweißprozess geschehen. Durch diese Maßnahme wird vermieden, dass es aufgrund von Materialverzügen während des Einschweißens des Verstärkungsbleches dazu kommt, dass bereits gesetzte Schweißnähte wieder aufbrechen.

Auch die DE 10 2008 036 340 A1 offenbart eine Verbundlenkerachse umfassend zwei Achslenker sowie einen Querträger, dessen Endabschnitte durch zwei Verstärkungsbleche versteift wird. Um auftretende Spannungsspitzen im Übergangsbereich zwischen dem torsionsweichen Mittelabschnitt des Querträgers und den steifen Endabschnitten zu vermeiden, lehrt die DE 10 2008 036 340 A1 Verstärkungsbleche zu verwenden, die in einer Schnittebene quer zur Längserstreckung des Querträgers einen gewölbten Profilquerschnitt aufweisen.

Es ist die Aufgabe der vorliegenden Erfindung, eine Kraftfahrzeugachse mit möglichst geringem Gewicht zur Verfügung zu stellen, bei der die Verteilung der auftretenden Spannungen im Übergangsbereich des Torsionsprofils zu den Längslenkern weiter verbessert ist und insbesondere die Lebensdauer beeinträchtigenden Spannungsspitzen reduziert werden.

Diese Aufgabe wird gelöst durch eine Kraftfahrzeugachse mit den Merkmalen von Patentanspruch 1. Weitere vorteilhaftere Ausgestaltungen der erfindungsgemäßen Kraftfahrzeugachse sind in den untergeordneten Patentansprüchen angegeben.

Eine erfindungsgemäße Kraftfahrzeugachse umfasst zwei in Fahrzeuglängsrichtung angeordnete Längslenker umfassend eine Anbindung an die Karosserie sowie eine Anbindung an das Fahrzeugrad, einen biegesteifen und torsionsweichen Querträger, der die beiden Längslenker in Fahrzeugquerrichtung miteinander verbindet und der aus einem einwandigen Metallprofil besteht, das im Querschnitt einen Bodensteg und zwei Seitenstege aufweist, wobei die Endabschnitte des Querträgers durch Verstärkungsbleche ausgesteift sind, wobei die Verstärkungsbleche an ihrem längslenkerseitigen Rand mit einem Längslenker und mit ihren längsseitigen Rändern und mit ihrem querseitigen Rand mit dem Metallprofil verbunden sind, wobei die Verstärkungsbleche in ihrem querträgerseitigem Endbereich mit einer punktförmigen Verbindung mit dem Bodensteg des Metallprofils gekoppelt sind.

Bei dem einwandigen Metallprofil handelt es sich um ein offenes Profil, dessen Querschnitt durch einen Bodensteg und zwei Seitenstege gebildet wird. Der Querschnitt kann über die Länge des Metallprofils variieren und so an die Anforderungen hinsichtlich Torsions- und Biegesteifigkeit maßgeschneidert angepasst werden. Dabei wird immer der Abschnitt des Querschnitts des Metallprofils, der der Öffnung gegenüberliegt, als Bodensteg bezeichnet und diejenigen Abschnitte des Querschnittes, die vom Bodensteg weg zur Öffnung hinweisen, als Seitenstege bezeichnet. Bodensteg und Seitenstege müssten dabei nicht zwingend plan ausgebildet sein oder in einer bestimmten Lage zueinander stehen.

Das Verstärkungsblech erstreckt sich von Längslenker aus in Richtung der Achsenmitte. Durch ein solches Verstärkungsblech werden die Endabschnitte des Querträgers versteift, so dass eine gewünschte Spur- und Sturzsteifigkeit insbesondere bei Seitenkrafteinfluss vorliegt. Üblicherweise sind die Verstärkungsbleche an den Längslenkern auf Höhe der Öffnung des Metallprofils verbunden. Mit zunehmender Erstreckung in Richtung der Achsmitte dringen die Verstärkungsbleche tiefer in die Profilöffnung ein bis sie mit ihrem querträgerseitigen Endbereich mit dem Bodensteg des Metallprofils in Berührung kommen.

Umlaufend werden die Verstärkungsbleche an ihrem Rand mit den Seitenstegen bzw. dem Bodensteg des Metallprofils und/oder dem Längslenker verbunden. Dies geschieht zumeist über eine formschlüssige Verbindung, beispielsweise eine Schweißung.

Die zusätzliche punktförmige Verbindung im querträgerseitigen Endbereich des Verstärkungsbleches mit dem Bodensteg des Metallprofils bewirkt eine bessere Verteilung der im Endbereich des Metallprofils auftretenden Spannungen während der Fahrt des Kraftfahrzeugs. Die Verbindung wird beabstandet vom querträgerseitigen Rand des Verstärkungsbleches erzeugt. Der Abstand beträgt dabei einige Millimeter bis einige Zentimeter.

Unter punktförmig ist hier zu verstehen, dass die Verstärkungsbleche mit dem Bodensteg des Metallprofils lokal begrenzt an einer Stelle verbunden sind. Punktförmig bedeutet insbesondere nicht, dass hier eine rein kreisförmige Verbindung mit minimaler Ausdehnung erzeugt wurde. Es kann sich vielmehr um eine beliebig geformte Verbindung mit einer Ausdehnung von mehreren Millimetern bis zu Zentimeter handeln. Eine Verbindung mit ovalem Umriss oder in Form eines Langlochs ist hier denkbar.

Unter dem querträgerseitigen Endbereich des Verstärkungsbleches ist der Endabschnitt des Verstärkungsbleches zu verstehen, dessen Rand mit dem Bodensteg des Metallprofils in Berührung ist. Der Endbereich hat dabei eine Ausdehnung von einigen Millimetern bis Zentimetern, abhängig von der konkreten Ausgestaltung des Verstärkungsbleches. Der Bereich ist nicht lediglich auf den das Metallprofil berührenden querträgerseitigen Rand des Verstärkungsbleches begrenzt.

Durch die erfindungsgemäße Anbindung eines Verstärkungsbleches ist es möglich, die während des Fahrzeugbetriebes auftretenden Spannungsspitzen im Endbereich des Querträgers um bis zu 10% zu reduzieren. In der Folge kann das Metallprofil aus einem Metallblech mit geringerer Wandstärke als üblich produziert werden. Dadurch sind erhebliche Gewichteinsparungen für die gesamte Kraftfahrzeugachse möglich.

Bei herkömmlichen Achskonzepten führen die auftretenden Spannungen und Kräfte zu Rissen im querträgerseitigen Endbereich des Verstärkungsbleches. Dadurch wird die Lebensdauer der entsprechenden Kraftfahrzeugachsen stark beeinträchtigt. Es ist demzufolge vorteilhaft, eine entsprechende punktförmige Verbindung gerade im Endbereich des Verstärkungsbleches herzustellen, da dadurch die an dieser Stelle wirkenden Kräfte besser verteilt werden.

In einer bevorzugten Ausführung der Kraftfahrzeugachse weist das Metallprofil einen U-förmigen oder V-förmigen oder Ω-förmigen oder hutförmigen Querschnitt auf. Der Querschnitt kann wie erwähnt auch über die Länge des Metallprofils variieren, so dass dessen Steifigkeitseigenschaften an die gewünschten Anforderungen angepasst sind.

Bevorzugt ist weiterhin ein mit dem Bodensteg in Anlage befindlicher Abschnitt des Verstärkungsbleches mit seiner Rückseite mit dem Bodensteg des Metallprofils gekoppelt. Dadurch wird eine stabilere Verbindung zwischen den Bauteilen erreicht, so dass eine Erhöhung der Lebensdauer der Kraftfahrzeugachse bewirkt werden kann.

Weiterhin bevorzugt handelt es sich bei der punktförmigen Verbindung um eine form- und/oder stoffschlüssige Verbindung, insbesondere ist die Verbindung als Lochschweißung, Verclinchung, Verprägung oder Klebung ausgebildet. Die Wahl des optimalen Verbindungsverfahrens hängt von den verwendeten Materialien ab. Die Auswahl beim Material reicht von Leichtmetall wie Aluminium bis hin zu im Fahrwerkbereich üblichen Stählen. Je nach der Ver- und Bearbeitbarkeit des jeweiligen Materials und dessen Zugänglichkeit zu den Verbindungsverfahren kann die Auswahl getroffen werden.

Es ist auch möglich mehrere Verbindungsmethoden miteinander zu kombinieren, beispielsweise zunächst eine Verclinchung durchzuführen, um das Verstärkungsblech und das Metallprofil miteinander zu fixieren und danach eine Klebung auszubilden, auf diese Weise wird verhindert, dass während des Austrocknens des Klebstoffes das Verstärkungsblech an das Metallprofil sich relativ zueinander bewegen.

Bevorzugt weist das Verstärkungsblech einen mehrfach gebogenen Verlauf auf. Unter mehrfach gebogen ist hierbei zu verstehen, dass das Verstärkungsblech in seinem Verlauf parallel zum Metallprofil eine oder mehrere Krümmungen und gerade Abschnitte aufweisen kann. Das Verstärkungsblech könnte beispielsweise einen einfachen S-Schlag oder einen doppelten S-Schlag aufweisen.

Es hat sich gezeigt, dass es möglich ist, die bei Belastung auftretenden Spannungen durch eine Anpassung der Form des Verstärkungsbleches weiter zu optimieren.

Eine entsprechende Formung des Verstärkungsbleches unterstützt damit die Wirkung der punktförmigen Verbindung im Endbereich des Verstärkungsbleches zusätzlich.

Insbesondere ist der Verlauf des Verstärkungsbleches derart gestaltet, dass die Verstärkungsbleche einen ersten Abschnitt aufweisen, der in einem Winkel von 0° bis 5° relativ zur Längsachse des Metallprofils abfallend verläuft, sowie daran anschließend einen zweiten Abschnitt aufweisen, der in einem Winkel von 30 bis 60° bevorzugt 40° bis 50°, besonders bevorzugt 43° bis 47° relativ zur Längsachse des Metallprofils abfallend verläuft.

Unter der Längsachse des Metallprofils ist diejenige Achse zu verstehen, die in Einbaulage der Kraftfahrzeugachse parallel zur Querachse des Kraftfahrzeuges verläuft.

Der erste Abschnitt der Verstärkungsbleche erstreckt sich bevorzugt vom Längslenker ausgehend hin zur Mitte der Kraftfahrzeugachse. Das längslenkerseitige Ende bzw. der längslenkerseitige Rand des Verstärkungsbleches ist üblicherweise mit dem Längslenker stoffschlüssig, beispielsweise über eine Schweißung, verbunden. Der längslenkerseitige Endbereich des Verstärkungsbleches kann dabei wie der gesamte erste Abschnitt in einem Winkel von 0° bis 5° relativ zur Längsachse des Metallprofils verlaufen. Es ist aber auch möglich, dass der längsträgerseitige Endbereich des Bleches nach oben oder nach unten gebogen ist, um eine optimale Anbindung des Verstärkungsbleches an den Längslenker zu gewährleisten.

Der erste Abschnitt geht dann über in den zweiten Abschnitt der steiler in Richtung des Bodensteges des Metallprofils hin verläuft. Das Verstärkungsblech wird mithin im Übergangsbereich zwischen dem ersten und dem zweiten Abschnitt in Richtung des Bodensteges des Metallprofils gebogen.

Der vom ersten Abschnitt wegweisende Endbereich des zweiten Abschnittes trifft dann auf den Bodensteg und wird dann mit einer punktförmigen Verbindung mit diesem gekoppelt.

In einer weiteren bevorzugten Ausführung der Kraftfahrzeugachse schließt an den zweiten Abschnitt ein dritter Abschnitt an, der um einen Winkel 0° bis 10° flacher relativ zum zweiten Abschnitt abfallen verläuft und in dem dann die Verbindung zum Bodensteg ausgebildet ist. Zwischen dem zweiten und dritten Abschnitt ist das Verstärkungsblech wieder gebogen, wobei nunmehr der dritte Abschnitt den Endbereich des Verstärkungsbleches bildet, der auf den Bodensteg des Metallprofils trifft.

Durch die Ausbildung dieses dritten Abschnittes wird der Winkel zwischen dem Endbereich des Verstärkungsbleches und dem Bodensteg des Metallprofils flacher, so dass die Herstellung der punktförmigen Verbindung erleichtert wird.

In Gesamtheit der vorstehenden Ausführungen ist dies eine exemplarische Ausgestaltung eines erfindungsgemäßen Verstärkungsbleches, das in etwa einen stufenförmigen Verlauf aufweist. Der Stufenverlauf bewirkt dabei eine zusätzliche Verbesserung bei der Verteilung der auftretenden Spannungen beim Betrieb des Kraftfahrzeugs.

Weiterhin vorteilhaft ist eine Ausgestaltung der erfindungsgemäßen Kraftfahrzeugachse derart, dass die Länge des ersten Abschnittes des Verstärkungsbleches das 0,7 bis 0,9-fache der Höhe des Endabschnittes des Metallprofiles beträgt. Durch diese Anpassung wird die Versteifung des Endabschnittes des Metallprofils weiterhin optimiert.

Im Rahmen der Erfindung ist es mittels der dargestellten Ausführungsvarianten des Verstärkungsbleches möglich, an die jeweilige Kraftfahrzeugachse und die jeweiligen Anforderungen angepasste Verstärkungsbleche zu verwenden, wobei diese Verstärkungsbleche unterschiedliche Verläufe in mehr als nur zwei oder drei Abschnitten aufweisen können. Sowohl die Gefälle der einzelnen Abschnitte der Verstärkungsbleche als auch die Bögen bzw. deren Radien bieten die Möglichkeit, die Verstärkungsbleche optimal anzupassen.

Weiterhin bevorzugt ist das Metallprofil mit im Wesentlichen in Richtung Fahrbahn zeigender Profilöffnung angeordnet.

Weitere Ziele, Vorteile, Merkmale und Anwendungsmöglichkeiten der vorliegenden Erfindung ergeben sich aus der nachfolgenden Beschreibung des Ausführungsbeispiels anhand der Zeichnungen. Dabei zeigen
- Figur 1: eine Ansicht einer Kraftfahrzeugachse,
- Figur 2: mehrere mögliche Querschnitte des Metallprofils,
- Figur 3: eine Ansicht eines Endabschnittes des Querträgers,
- Figur 4: einen Querschnitt des Endabschnittes des Querträgers in Seitenansicht und
- Figur 5: eine Ansicht des mehrfach gebogenen Verlaufes eines Verstärkungsbleches.

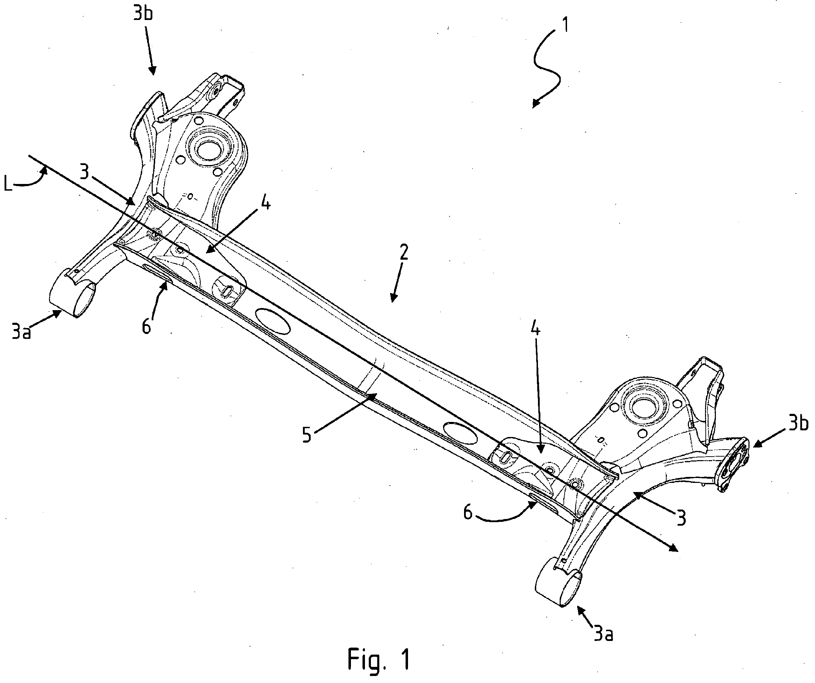

Eine erfindungsgemäße Kraftfahrzeugachse 1 ist in Figur 1 in einer Totalansicht dargestellt. Die Kraftfahrzeugachse 1 umfasst zwei in Fahrzeuglängsrichtung angeordnete Längsträger 3 mit einer Anbindung 3a an die Karosserie sowie einer Anbindung 3b an den Fahrzeugrad. Diese beiden Längslenker 3 sind über einen Querträger 2 miteinander verbunden. Dieser Querträger 2 erstreckt sich in Fahrzeugquerrichtung.

Der Querträger 2 besteht aus einem einwandigen Metallprofil 5 und besitzt in seinen Endabschnitten 6 jeweils ein Verstärkungsblech 4, das dort angebracht ist, um die Endabschnitte 6 des Querträgers 2 zu versteifen. Dadurch erhält man einen torsionsweichen Mittelabschnitt des Querträgers 2, wohingegen seine Endabschnitte 6 torsionssteif verbleiben.

Ebenfalls eingezeichnet ist die Längsachse L des Querträgers 2, die parallel zur Querachse des Kraftfahrzeugs verläuft.

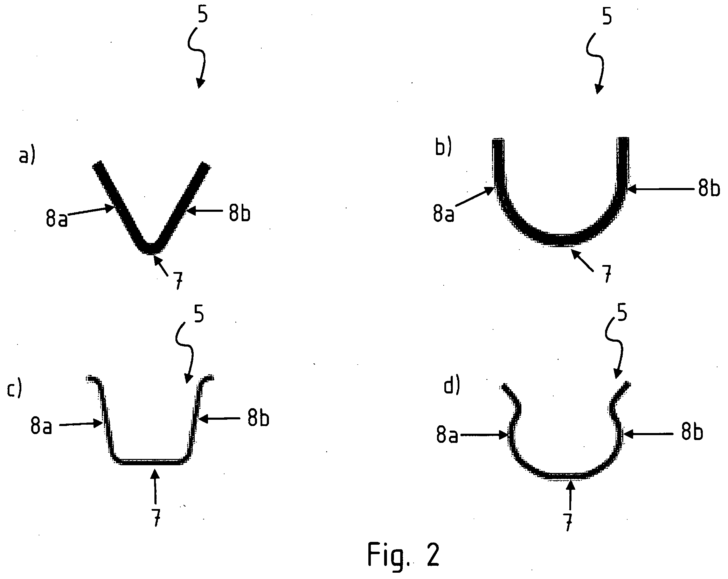

Der Querträger 2 besteht aus einem einwandigen Metallprofil 5, das im Querschnitt einen Bodensteg 7 und zwei Seitenstege 8a, 8b aufweist. Für den Querschnitt des Profils besteht eine Vielzahl von Variationsmöglichkeiten, die je nach den Anforderungen an die Bauteileigenschaften ausgewählt werden können. In Figur 2 sind mehrere mögliche Varianten des Querschnitts des Metallprofils dargestellt. Gemeinsam ist allen Ausgestaltungen, dass es sich um offene Profile handelt. Im Rahmen der Erfindung bildet der dieser Öffnung gegenüberliegende Abschnitt des Metallprofils 5 den Bodensteg 7. Die vom Bodensteg 7 ausgehend in Richtung der Öffnung verlaufenden Abschnitte des Metallprofils sind die Seitenstege 8a, 8b.

Figur 2a zeigt einen V-förmigen Querschnitt für ein Metallprofil 5, wobei der Bodensteg 7 nicht flach ausgebildet ist, sondern einen Bogen darstellt. Die Seitenstege 8a, 8b verlaufen etwa in einem Winkel von 45° vom Bodensteg 7 weg. Im Unterschied dazu verlaufen die Seitenstege 8a, 8b in Figur 2b senkrecht und gehen dann in den Bodensteg 7 über, der etwas flacher und mit größerem Radius ausgeprägt ist als bei der V-Form. In Figur 2b ist somit ein U-förmiges Profil dargestellt. Bei den in Figur 2c dargestellten hutförmigen Profil ist der Bodensteg 7 im Gegensatz zu den vorstehend ausgeführten Beispielen ausgeprägt flach ohne Krümmung ausgeführt. Die Seitenstege 8a, 8b ragen in einem Winkel von etwa 90° nach oben. Die die Öffnung bildenden Ränder der Seitenstege 8a, 8b können, wie hier dargestellt, auch ausgestellt werden und die Steifigkeitseigenschaften des Profils zu verbessern. Bei einem omegaförmigen Querschnitt des Metallprofils 5, wie er in Figur 2d dargestellt ist, sind die Seitenstege 8a, 8b nicht mehr plan ausgeführt, sondern sind von außen betrachtet konkav nach innen gebogen.

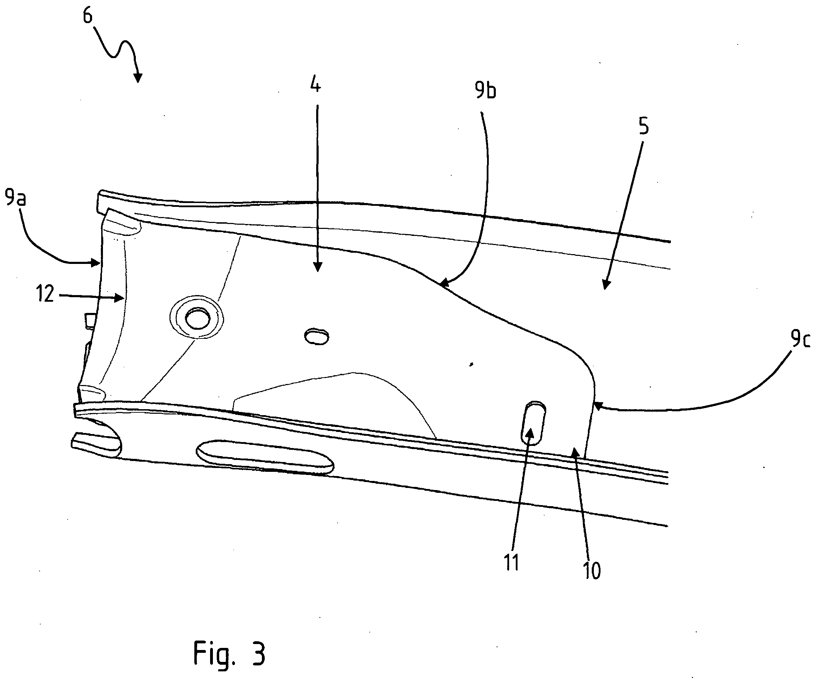

Die Endabschnitte 6 des Querträgers 2 sind mit Verstärkungsblechen 4 versehen, die zu einer Aussteifung der Endabschnitte 6 führen. Figur 3 zeigt eine Detailansicht eines Endabschnittes 6 eines Querträgers 2. Als Endabschnitt 6 wird im Wesentlichen der Abschnitt des Querträgers 2 bezeichnet, in dem sich das Verstärkungsblech 4 erstreckt und der durch das Verstärkungsblech 4 in seinen Torsionseigenschaften verändert wird.

Das Verstärkungsblech 4 ist mit seinen Rändern 9a, 9b, 9c umlaufend mit dem Querträger 2 und dem Längslenker 3 verbunden. Dabei ist der längslenkerseitige Rand 9a des Verstärkungsbleches 4 mit dem Längslenker 3 verbunden, wohingegen die längsseitigen Ränder 9b und der querträgerseitige Rand 9c mit dem Metallprofil 5 verbunden sind. Diese Verbindungen werden zumeist als Schweißung ausgeführt, es ist jedoch auch möglich hier eine Klebung oder eine andere stoffschlüssige Verbindung herzustellen. Das Verstärkungsblech 4 erstreckt sich also vom Längslenker 3 ausgehend innerhalb des Metallprofils 5 des Querträgers 2 in Richtung der Fahrzeugmitte. Das Verstärkungsblech 4 ist dabei an einem längsträgerseitigen Endbereich 12 an der oder knapp unterhalb der Öffnung des Metallprofils 5 angebunden und erstreckt sich schräg nach unten verlaufend (aus dem Blickwinkel der Figur 3) in Richtung des Bodensteges 7. Dort in diesem querträgerseitigen Endbereich 10 des Verstärkungsblechs 4 befindet sich eine zusätzliche punktförmige Verbindung 11 des Verstärkungsbleches 4 mit dem Bodensteg 7 des Metallprofils 5. Diese punktförmige Verbindung 11 ist im Ausführungsbeispiel als Lochschweißung ausgebildet. Im Rahmen der Erfindung ist es aber auch möglich, diese Verbindung als Lochschweißung, Verclinchung, Verprägung oder Verklebung auszubilden.

Die Lochschweißung ist hier als Langloch ausgestaltet und einige Zentimeter vom querträgerseitigen Rand 9c des querträgerseitigen Endes 10 des Verstärkungsbleches 4 entfernt.

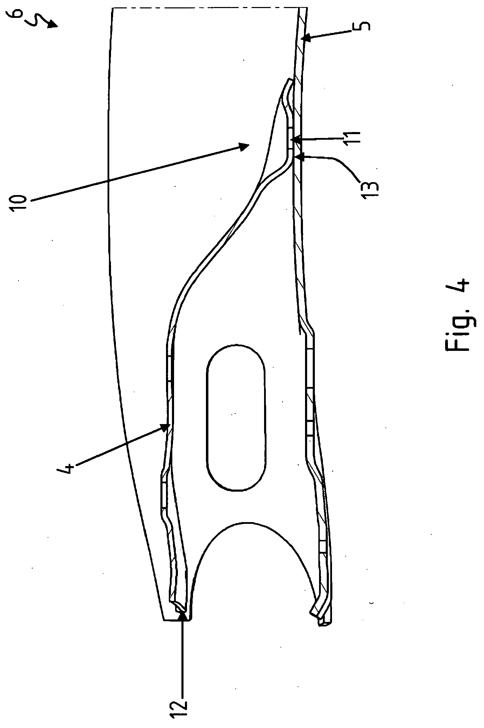

Diese Verbindung 11 führt dazu, dass die Rückseite 13 des Verstärkungsbleches durch die Lochschweißung mit dem Bodensteg 7 des Metallprofils 5 verbunden ist. Dies wird in der Querschnittsdarstellung des Endabschnittes 6 des Querträgers 2 in der Figur 4 noch einmal deutlich.

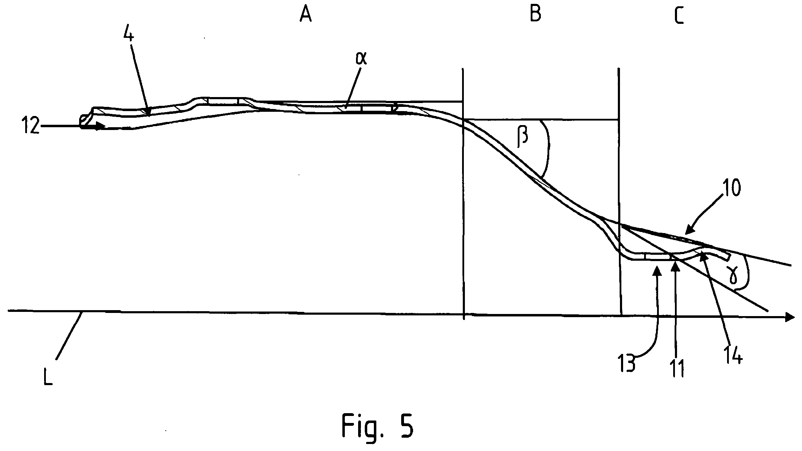

In Figur 4 ist auch der mehrfach gebogene Verlauf des Verstärkungsblechs 4 zu erkennen. Das Verstärkungsblech 4 kann in mehrere Abschnitte unterteilt werden, wie in Figur 5 dargestellt ist. Ausgehend vom längsträgerseitigen Ende 12 weist das Verstärkungsblech 4 einen ersten Abschnitt A auf, der im Wesentlichen parallel zur Längsachse L des Querträgers 2 verläuft. Parallel bedeutet im Rahmen der Erfindung, dass der erste Abschnitt A in einem Winkel α von 0° bis 5° relativ zur Längsachse des Metallprofils abfallend verläuft, wobei mit abfallend der Verlauf vom freien Rand der Seitenstege 8a, 8b zum Bodensteg 7 hin gemeint ist.

An den ersten Abschnitt A schließt sich ein zweiter Abschnitt B an, in dem der Verlauf des Verstärkungsbleches 4 steiler wird, so dass der Abschnitt B in einem Winkel β von 30° bis 60° bevorzugt 40° bis 50°, besonders bevorzugt 43° bis 47° relativ zur Längsachse L des Querträgers 2 abfallend verläuft.

Schließlich zeigt das Ausführungsbeispiel noch einen dritten Abschnitt C, in dem der Verlauf des Verstärkungsbleches 4 wieder flacher wird und der um einen Winkel γ 0° bis 10° flacher relativ zum zweiten Abschnitt abfallend verläuft und schließlich mit dem querträgerseitigen Rand 9c des Verstärkungsbleches 5 den Bodensteg 7 des Metallprofils 5 berührt. In diesem Abschnitt ist auch die punktförmige Verbindung 11 zum Bodensteg 7 ausgebildet. Im Bereich der Lochschweißung 11 weicht der Verlauf des Bleches von der umliegenden Topologie auch vom sonst vorliegenden Verlauf des Verstärkungsbleches 4 ab. Durch den Schweißprozess wird im Bereich der Lochschweißung 11 eine Einprägung 14 erzeugt, in deren Bereich die Rückseite 13 des Verstärkungsbleches 4 in Anlage mit dem Bodensteg 7 des Metallprofils 5 kommt.

Insgesamt ergibt sich in diesem Ausführungsbeispiel ein in etwa stufenförmiger Verlauf des Verstärkungsbleches 4. Durch diese Ausgestaltung ist eine besonders stabile Versteifung und Verteilung der auftretenden Kräfte möglich.

### Bezugszeichen:

- 1 -: Kraftfahrzeugachse
- 2 -: Querträger
- 3 -: Längslenker
- 3a -: Anbindung
- 3b -: Anbindung
- 4 -: Verstärkungsblech
- 5 -: Metallprofil
- 6 -: Endabschnitt
- 7 -: Bodensteg
- 8 -: Seitensteg
- 8a -: Seitensteg
- 8b -: Seitensteg
- 9 -: Rand
- 9a -: längslenkerseitiger Rand
- 9b -: längsseitiger Rand
- 9c -: querträgerseitiger Rand
- 10 -: Endbereich
- 11 -: Verbindung
- 12 -: Ende
- 13 -: Rückseite
- 14 -: Einprägung

- A -: Abschnitt
- B -: Abschnitt
- C -: Abschnitt
- L -: Längsachse
- α -: Winkel
- β -: Winkel
- γ -: Winkel

## Patentansprüche

1. Kraftfahrzeugachse (1) umfassend zwei in Fahrzeuglängsrichtung angeordnete Längslenker (3) umfassend eine Anbindung (3a) an die Karosserie sowie eine Anbindung (3b) an das Fahrzeugrad, einen biegesteifen und torsionsweichen Querträger (2), der die beiden Längslenker (3) in Fahrzeugquerrichtung miteinander verbindet und der aus einem einwandigen Metallprofil (5) besteht, das im Querschnitt einen Bodensteg (7) und zwei Seitenstege (8a, 8b) aufweist, wobei die Endabschnitte (6) des Querträgers (2) durch Verstärkungsbleche (4) ausgesteift sind, wobei die Verstärkungsbleche (4) an ihrem längslenkerseitigen Rand (9a) mit einem Längslenker (3) und mit ihren längsseitigen Rändern (9b) und ihrem querträgerseitigen Rand (9c) mit dem Metallprofil (5) gekoppelt sind, **dadurch gekennzeichnet, dass** die Verstärkungsbleche (4) in ihrem querträgerseitigen Endbereich (10) mit einer punktförmigen Verbindung (11) beabstandet vom querträgerseitigen Rand (9c) des Verstärkungsbleches (4) mit dem Bodensteg (7) des Metallprofils (5) gekoppelt sind.

2. Kraftfahrzeugachse nach Anspruch 1, **dadurch gekennzeichnet, dass** das Metallprofil (5) einen U-förmigen oder V-förmigen oder Ω-förmigen oder hutförmigen Querschnitt aufweist.

3. Kraftfahrzeugachse nach Anspruch 1 oder 2, **dadurch gekennzeichnet, dass** ein mit dem Bodensteg (7) in Anlage befindlicher Abschnitt des Verstärkungsbleches (4) mit seiner Rückseite (13) mit dem Bodensteg (7) gekoppelt ist.

4. Kraftfahrzeugachse nach einem der vorhergehenden Ansprüche, **dadurch gekennzeichnet, dass** die punktförmige Verbindung (11) eine form- und/oder stoffschlüssige Verbindung ist, insbesondere ist die Verbindung als Lochschweißung, Verclinchung, Verprägung oder Klebung ausgebildet.

5. Kraftfahrzeugachse nach einem oder mehreren der vorstehende Ansprüche, **dadurch gekennzeichnet, dass** die Verstärkungsbleche (4) einen mehrfach gebogenen Verlauf aufweisen.

6. Kraftfahrzeugachse nach Anspruch 5, **dadurch gekennzeichnet, dass** der Verlauf der Verstärkungsbleche (4) derart gestaltet ist, dass die Verstärkungsbleche einen ersten Abschnitt (A) aufweisen, der in einem Winkel α von 0° bis 5° relativ zur Längsachse (L) des Metallprofils (5) abfallend verläuft, sowie daran anschließend einen zweiten Abschnitt (B) aufweisen, der in einem Winkel β von 30° bis 60°, bevorzugt 40° bis 50°, besonders bevorzugt 43° bis 47° relativ zur Längsachse (L) des Metallprofils (5) abfallend verläuft.

7. Kraftfahrzeugachse nach Anspruch 6, **dadurch gekennzeichnet, dass** an dem zweiten Abschnitt (B) ein dritter Abschnitt (C) anschließt, der um einen Winkel γ 0° bis 10° flacher relativ zum zweiten Abschnitt (B) abfallend verläuft und indem die punktförmige Verbindung (11) zum Bodensteg (7) ausgebildet ist.

8. Kraftfahrzeugachse nach Anspruch 6 oder 7, **dadurch gekennzeichnet, dass** die Länge des ersten Abschnittes (A) des Verstärkungsbleches (4) das 0,7 bis 0,9-fache der Höhe des Endabschnittes (6) des Metallprofiles (5) beträgt.

9. Kraftfahrzeugachse nach einem oder mehreren der vorstehenden Ansprüche, **dadurch gekennzeichnet, dass** das Metallprofil (5) mit im Wesentlichen in Richtung Fahrbahn zeigender Profilöffnung angeordnet ist.

## Claims

1. Vehicle axle (1) having two trailing arms (3) mounted in the longitudinal direction of the vehicle and comprising an attachment (3a) to the vehicle body and an attachment (3b) to the vehicle wheel, a flexurally rigid and torsionally soft transverse carrier (2) which joins the two trailing arms (3) together in the transverse direction of the vehicle and consists of a single-walled metal profile (5) which, viewed in cross-section, has a bottom web (7) and two side webs (8a, 8b), the end portions (6) of the transverse carrier (2) being stiffened by reinforcing plates (4), the reinforcing plates (4) being coupled to a trailing arm (3) at their edge (9a) nearest the trailing arm, and to the metal profile (5) by their longitudinal edges (9b) and by their edge (9c) on the transverse carrier side, **characterised in that** the reinforcing plates (4) are coupled to the bottom web (7) of the metal profile (5),in their end region (10) on the transverse carrier side, by a point connection(11) spaced from the edge (9c) of the reinforcing plate (4) on the transverse carrier side.

2. Vehicle axle according to claim 1, **characterised in that** the metal profile (5) has a U-shaped or V-shaped or Ω-shaped or hat-shaped cross-section.

3. Vehicle axle according to claim 1 or 2, **characterised in that** a portion of the reinforcing plate (4) in contact with the bottom web (7) is coupled by its back side (13) to the bottom web (7).

4. Vehicle axle according to one of the preceding claims, **characterised in that** the point connection (11) is an interlockingly and/or materially engaging connection, more particularly in the form of a slot weld, a clinched joint, an embossed joint or an adhesive bond.

5. Vehicle axle according to one or more of the preceding claims, **characterised in that** the reinforcing plates (4) have a multiply bent configuration.

6. Vehicle axle according to claim 5, **characterised in that** the configuration of the reinforcing plates (4) is such that the reinforcing plates have a first portion (A) which runs downwards at an angle α of 0° to 5° relative to the longitudinal axis (L) of the metal profile (5), followed by a second portion (B) which runs downwards at an angle β of 30° to 60°, preferably 40° to 50°, particularly preferably 43° to 47°, relative to the longitudinal axis (L) of the metal profile (5).

7. Vehicle axle according to claim 6, **characterised in that** adjoining the second portion (B) is a third portion (C) which runs downwards at an angle y which is 0° to 10° flatter relative to the second portion (B), the point connection (11) being formed with the bottom web (7).

8. Vehicle axle according to claim 6 or 7, **characterised in that** the length of the first portion (A) of the reinforcing plate (4) is 0.7 to 0.9 times the height of the end portion (6) of the metal profile (5).

9. Vehicle axle according to one or more of the preceding claims, **characterised in that** the metal profile (5) is arranged with its profile opening pointing substantially in the direction of the roadway.

## Revendications

1. Axe de véhicule automobile (1) comprenant deux bras oscillants longitudinaux (3) agencés dans le sens de la longueur du véhicule et comprenant une liaison (3a) à la carrosserie ainsi qu'une liaison (3b) à la roue de véhicule, une barre transversale (2) rigide en flexion et souple en torsion, qui relie les deux bras longitudinaux (3) dans le sens transversal du véhicule et qui est constituée d'un profilé métallique à âme simple (5) qui comporte en section transversale une traverse de fond (7) et deux traverses latérales (8a, 8b), les tronçons terminaux (6) des barres transversales (2) étant renforcés par des tôles de renfort (4), les tôles de renfort (4) étant couplées au niveau de leur bord (9a) côté bras longitudinaux à un bras longitudinal (3) et au niveau de leurs bords (9b) côté longitudinal et de leur bord (9c) côté barre transversale au profilé métallique (5), **caractérisé en ce que** les tôles de renfort (4) sont couplées dans leur zone terminale (10) côté barre transversale, avec un assemblage ponctuel (11) distant du bord (9c), côté barre transversale, de la tôle de renfort (4), à la traverse de fond (7) du profilé métallique (5).

2. Axe de véhicule automobile selon la revendication 1, **caractérisé en ce que** le profilé métallique (5) a une section transversale en forme de U, de V, de Ω ou de chapeau.

3. Axe de véhicule automobile selon la revendication 1 ou 2, **caractérisé en ce qu'**un tronçon de la tôle de renfort (4) qui se trouve en appui contre la traverse de fond (7) est couplé avec son côté arrière (13) à la traverse de fond (7).

4. Axe de véhicule automobile selon l'une des revendications précédentes, **caractérisé en ce que** l'assemblage ponctuel (11) est un assemblage par concordance de forme ou de matière, l'assemblage étant réalisé notamment par soudage en bouchon, par clinchage, par estampage ou par collage.

5. Axe de véhicule automobile selon une ou plusieurs des revendications précédentes, **caractérisé en ce que** les tôles de renfort (4) ont une allure plusieurs fois courbée.

6. Axe de véhicule automobile selon la revendication 5, **caractérisé en ce que** l'allure des tôles de renfort (4) est conçue de telle sorte que les tôles de renfort ont un premier tronçon (A) qui s'étend en descendant selon un angle α de 0° à 5° par rapport à l'axe longitudinal (L) du profilé métallique (5) ainsi que, à la suite, un deuxième tronçon (B) qui s'étend en descendant selon un angle de 30° à 60°, de préférence de 40° à 50°, plus de préférence de 43° à 47°, par rapport à l'axe longitudinal (L) du profilé métallique (5).

7. Axe de véhicule automobile selon la revendication 6, **caractérisé en ce que** le deuxième tronçon (B) est suivi d'un troisième tronçon (C) qui s'étend en descendant selon un angle y de 0° à 10° plus plat par rapport au deuxième tronçon (B) et dans lequel l'assemblage ponctuel (11) avec la traverse de fond (7) est réalisé.

8. Axe de véhicule automobile selon la revendication 6 ou 7, **caractérisé en ce que** la longueur du premier tronçon (A) de la tôle de renfort (4) vaut 0,7 à 0,9 fois la hauteur du tronçon terminal (6) du profilé métallique (5).

9. Axe de véhicule automobile selon une ou plusieurs des revendications précédentes, **caractérisé en ce que** le profilé métallique (5) est agencé avec une ouverture de profilé regardant globalement en direction de la chaussée.
